# EUROPEAN PATENT APPLICATION

(11) **EP 2 351 953 A1**
(43) Date of publication of application: **03.08.2011**
(21) Application number: 10811575.9
(22) Date of filing: 19.05.2010
(51) Int. Cl.: F16J 15/32

(54) **CONTAMINANT SEALING DEVICE**

(30) Priority: 28.08.2009 JP 2009198984
(71) Applicant: Eagle Industry Co., Ltd., Minato-ku Tokyo 105-8587 (JP)
(72) Inventor: TAKANO Yoshihisa, Tokyo 105-8587 (JP); FUTAKUCHI Masayuki, Tokyo 105-8587 (JP)
(74) Representative: WSL Patentanwälte
(86) International application number: PCT/JP2010/058416
(87) International publication number: WO 2011/024522

(57) **Abstract**

[Object] An object of the present invention is to provide a contaminant sealing device wherein the pressure force of the sliding part does not increase proportionately even if the sealed fluid pressure increases, and the amount of change in the friction of the sliding part can be reduced relative to the change in the sealed fluid pressure.

[Means of Achievement] The contaminant sealing device of the present invention is a sealing device comprising an annular packing for reciprocating movement or rotation, the packing being mounted to one of two members that face each other and being disposed in slidably intimate contact against another of the two members; the sealing device **characterized in that** the cross-sectional shape of the annular packing is a substantial Y shape, the back portion of the substantial Y shape is disposed so as to face a high pressure side, and a high-pressure fluid acts on a space formed by the back portion of the substantial Y shape and the two members that face each other.

## Description

### TECHNICAL FIELD

The present invention relates to a contaminant sealing device comprising an annular packing for reciprocating movement or rotation, wherein the packing is attached to one of two members that face each other and is capable of sliding firmly against the other of the two members. The contaminant sealing device of the present invention is used as a device for sealing reciprocating components in a solenoid valve, for example.

### BACKGROUND ART

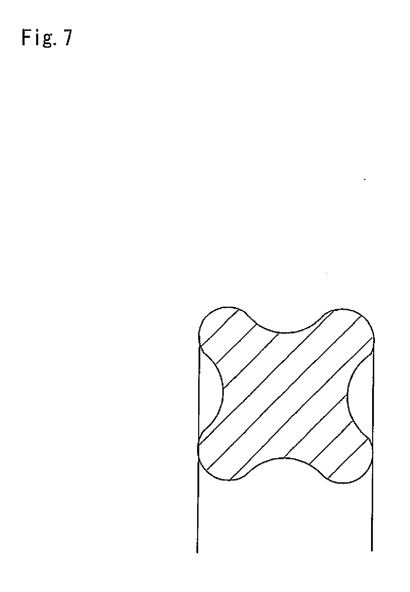

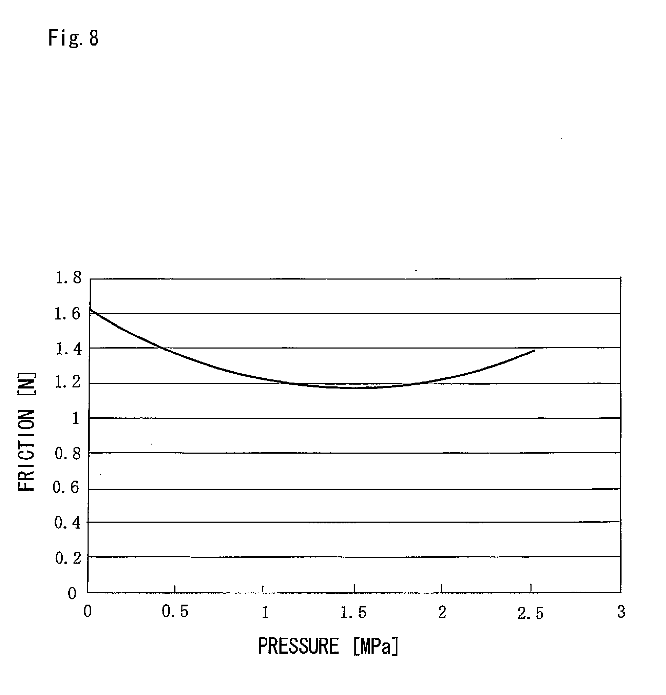

Conventionally, in the narrow area between the valve and the body of a solenoid valve, for example, contaminants from the outside enter and cause poor performance. There are cases in which a sealing mechanism is installed in this area to prevent contaminants from entering, but when common conventionally known packing or the like is used it is packed in hermetically, therefore causing problems of high friction.
To reduce friction, an X ring (hereinbelow referred to as "Prior Art 1;" see Patent Literature 1, for example) is used, which has an X shape in cross section and which is intended to reducing the sliding of a lip sliding part as shown in FIG. 7, and the surface area of the lip sliding part is preferably reduced, but even when the X ring of Prior Art 1 is used, problems of fluctuating friction occur as shown in FIG. 8 when pressure changes occur in the fluid being sealed.
A friction test was performed with a seal diameter 0 of 4.8 mm and an interference of 0.1 mm. The pressure [MPa] along the horizontal axis of FIG. 8 shows the pressure difference between the high pressure side and the low pressure side.

The invention shown in FIG. 9 (hereinbelow referred to as "Prior Art 2;" see Patent Literature 2, for example) is known as being intended to suppress changes in friction and maintain stable sealing performance even when the pressure of the fluid being sealed has changed.
In the invention of Prior Art 2, a side ring and a back ring are attached in addition to a seal ring, and the fluid pressure acting on the back ring is blocked by the side ring even when the pressure of the fluid being sealed has changed, preventing deformation of the back ring and thereby suppressing the change in friction on the seal ring. This invention therefore has had the drawbacks of having a large number of components and requiring a large amount of space.

### PRIOR ART REFERENCES

### PATENT REFERENCES

Patent Reference 1: Japanese Laid-open Patent Application No. 2006-266279
Patent Reference 2: Japanese Laid-open Patent Application No. 2006-112486

### SUMMARY OF INVENTION

### [Technical Problem]

In view of the fact that complete sealing rather than fluid sealing is not necessary in a contaminant seal, an object of the present invention is to provide a contaminant sealing device wherein the conventional high-pressure-side sliding part of the X ring is omitted, the sliding part is provided to the low pressure side, and the arrangement structure is intended to achieve a balance between the expansion force of the sealing ring itself which occurs with the fastening of the sealing ring, and the pressure of the sealed fluid acting on the outer surface of the sealing ring; whereby the pressure force of the sliding part does not increase proportionately even if the sealed fluid pressure increases, and the amount of change in the friction of the sliding part can be reduced relative to the change in the sealed fluid pressure.
Another object of the present invention is to provide a contaminant sealing device wherein the number of components can be reduced and the required space can be reduced.
Another object of the present invention is to provide a contaminant sealing device wherein the interference of the sealing ring can be properly managed.
In the present invention, the term "contaminant sealing" means sealing contaminants included in the sealed fluid, and the sealed fluid is not completely sealed.

### [Solution to Problem]

The contaminant sealing device according to a first aspect of the present invention for achieving the object described above is a sealing device comprising an annular packing for reciprocating movement or rotation, the packing being mounted to one of two members that face each other and being disposed in slidably intimate contact against another of the two members; the sealing device characterized in that the cross-sectional shape of the annular packing is a substantial Y shape, the back portion of the substantial Y shape is disposed so as to face a high pressure side, and a high-pressure fluid acts on a space formed by the back portion of the substantial Y shape and the two members that face each other.

According to the first characteristic, the pressure force of the sliding part does not increase proportionately even if the sealed fluid pressure increases, and the amount of change in the friction of the sliding part can be reduced relative to the change in the sealed fluid pressure.
The number of components can also be reduced, and the required space can be reduced.

The contaminant sealing device according to a second aspect of the present invention is the contaminant sealing device according to the first aspect characterized in that the annular packing is mounted in an annular groove of the outer member and is disposed so that an upper portion of the cross-sectional substantial Y shape makes intimate contact with the outer member, and a lower portion slides along the inner member.
According to the second characteristic, in addition to the effects of the first characteristic, ensuring the space for mounting the annular packing and mounting the annular packing can be made easier.

The contaminant sealing device according to a third aspect of the present invention is the contaminant sealing device according to the first or second aspects characterized in that an annular spacer is arranged on one side surface of the cross-sectional substantial Y shape of the annular packing, the annular packing is configured to be capable of being mounted using a pressing jig with the annular spacer interposed therebetween, and interference of the annular packing can be managed by adjusting the position in which the annular spacer is incorporated.
According to the third characteristic, the interference of the annular packing can be properly managed, and the amount of change in the friction of the sliding part can be minimized.
The contaminant sealing device according to a fourth aspect of the present invention is characterized in that the contaminant sealing device of any of the first through third aspects is incorporated into a capacity control solenoid valve.
According to the fourth characteristic, impurities can be prevented from entering into the minuscule gap between the valve body and the valve housing without enlarging the capacity control solenoid valve, and as a result, there is no need to increase the thrust of the solenoid.

### [Advantageous Effects of Invention]

The present invention exhibits superior effects such as the following.
(1) The pressure force of the sliding part does not increase proportionately even if the sealed fluid pressure increases, and the amount of change in the friction of the sliding part can be reduced relative to the change in the sealed fluid pressure by forming the cross-sectional shape of the annular packing into a substantial Y shape, disposing the annular packing so that the back portion of the substantial Y shape faces the high pressure side, and causing the high-pressure fluid to act on the space formed by the back portion of the substantial Y shape and the two members that face each other.
   The number of components can also be reduced, and the required space can be reduced.
(2) It is possible to more readily ensure the space for mounting the annular packing and mounting the annular packing by mounting the annular packing in the annular groove of the outer member and disposing the annular packing so that that the upper portion of the cross-sectional substantial Y shape is held firmly against the outer member and the lower portion slides along the inner member.
(3) The interference of the annular packing can be properly managed, and the amount of change in the friction of the sliding part can be minimized by placing the annular spacer on one side surface of the cross-sectional substantial Y shape of the annular packing, configuring the annular packing to be capable of being mounted by the pressing jig via the annular spacer, and enabling the interference of the annular packing to be managed by adjusting the incorporated position of the annular spacer.
(4) By incorporating the contaminant sealing device of the present invention into a capacity control solenoid valve, impurities can be prevented from entering into the minuscule gap between the valve body and the valve housing without enlarging the capacity control solenoid valve; as a result, there is no need to increase the thrust of the solenoid.

### BRIEF DESCRIPTION OF DRAWINGS

FIG. 1 is a front cross-sectional view showing a contaminant sealing device according to an embodiment of the present invention;
FIG. 2 is a front cross-sectional view showing an example of an annular packing according to an embodiment of the present invention;
FIG. 3 shows the results of a friction test when the annular packing having the substantially Y-shaped cross section of the present invention is used;
FIG. 4 is a front cross-sectional view showing a case in which the annular packing having the substantially Y-shaped cross section of the present invention has been applied to a capacity control solenoid valve;
FIG. 5 is a partial front cross-sectional view for describing a case in which the annular packing having the substantially Y-shaped cross section of the present invention is mounted in a capacity control solenoid valve;
FIG. 6 is a front cross-sectional view showing a state in which the annular packing having the substantially Y-shaped cross section of the present invention has been mounted in a capacity control solenoid valve;

FIG. 7 is a front cross-sectional view showing an X ring according to Prior Art 1;
FIG. 8 shows the result of a friction test in a case in which the X ring of Prior Art 1 is used; and

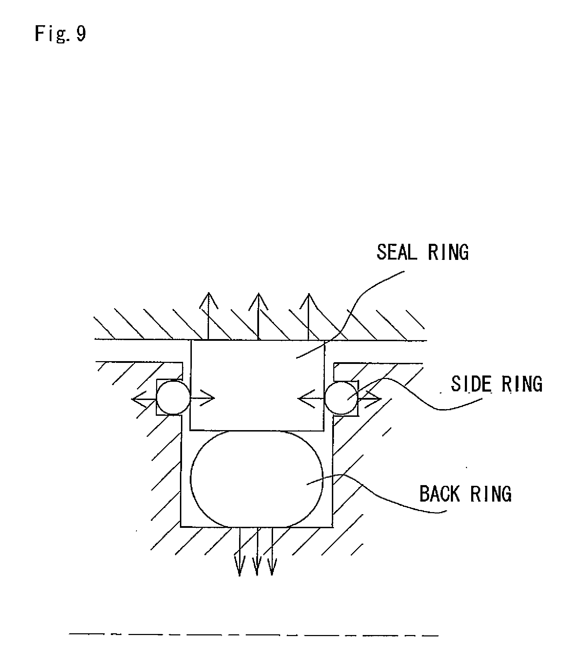

FIG. 9 is a front cross-sectional view showing Prior Art 2.

### DESCRIPTION OF EMBODIMENTS

Modes for carrying out the contaminant sealing device according to the present invention are described in detail with reference being made to the accompanying drawings, but the present invention is not to be interpreter as being limited to these modes. Any of a variety of modifications, revisions, and improvements can be added based on the knowledge of those skilled in the art as long as they do not deviate from the scope of the present invention.

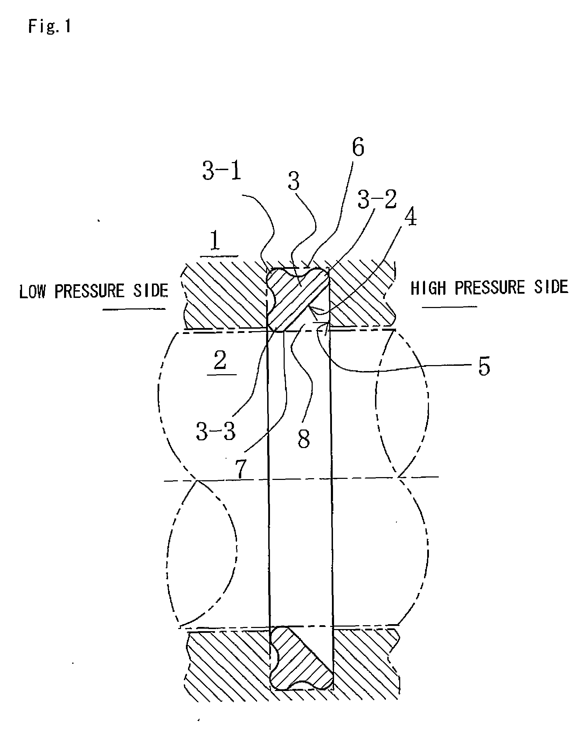

FIG. 1 is a front cross-sectional view showing a contaminant sealing device, wherein, between a member 1 positioned on the outer side and a member 2 positioned on the inner side, an annular groove 5 for attaching an annular packing 3 is provided to the outer member 1. The annular packing 3 is placed so that the inner peripheral surface of the annular packing 3 is capable of sliding firmly against the inner member 2. The cross-sectional shape of the annular packing 3 has a substantial Y shape, and a back portion 4 of the substantial Y shape is disposed so as to face the high pressure side. Therefore, a high-pressure fluid acts on a space 8 having a substantially triangular shape in cross section, which is formed by the back portion 4 of the substantial Y shape, one side surface of the annular groove 5 of the outer member 1, and the sliding surface of the inner member 2.

In the example shown in FIG. 1, the annular packing 3 is mounted in the annular groove 5 of the outer member 1, an upper portion 6 of the cross-sectional substantial Y shape is held firmly against the annular groove 5 of the outer member, and a lower portion 7 is disposed so as to slide along the inner member 2. When the annular packing 3 is mounted in the annular groove of the inner member 2, the upper portion 6 of the cross-sectional substantial Y shape is held firmly in the annular groove of the inner member 2, and the lower portion 7 is disposed so as to slide along the inner member 2.
Thus, a first characteristic of the annular packing 3 having a substantially Y-shaped cross section according to the present invention is that the conventional high-pressure-side sliding part of the X ring is omitted to have fewer sliding parts, and the sliding part is provided to the low pressure side. A second characteristic is that the expansion force relative to the force of fastening the annular packing 3 is reduced by the pressure of the sealed fluid.

The term "substantial Y shape" herein means that the essential shape is preferably the shape of the letter Y, wherein three outer points 3-1, 3-2, and 3-3 of the substantial Y shape constitute seal parts. The term "back portion of the substantial Y shape" refers to the portion indicated by the symbol 4 in FIG. 1, which is, among the short sides and long side constituting the substantial Y shape, the surface of the long side on the side opposite the short sides. The term "upper portion of the substantial Y shape" refers to the upper side of the Y shape, i.e. the portion indicated by the symbol 6 in FIG. 1, and the term "lower portion of the substantial Y shape" refers to the lower side of the Y shape, i.e. the portion indicated by the symbol 7 in FIG. 1.

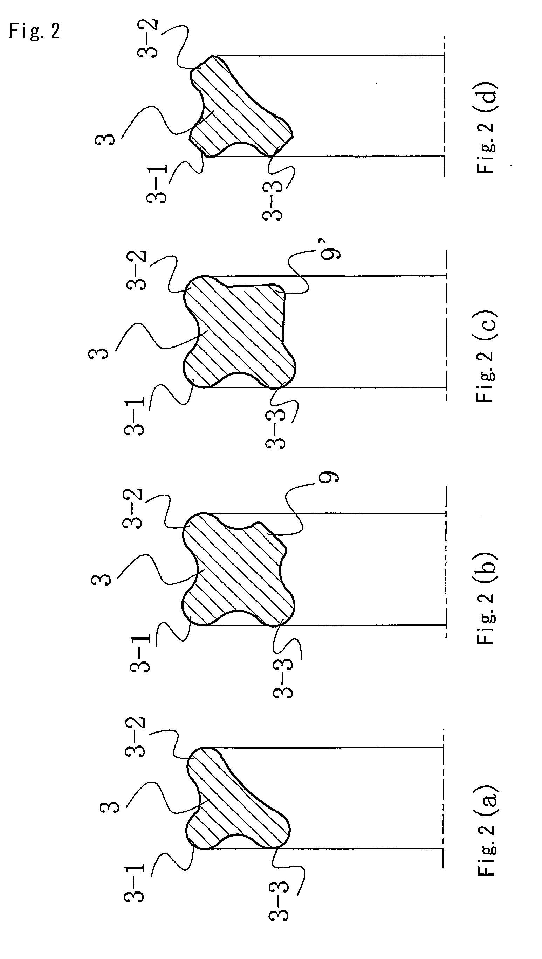

FIG. 2 is a front cross-sectional view showing another example of the annular packing 3.
The annular packing 3 is molded into a ring shape from hydrogenated nitrile rubber (HNBR), ethylene propylene rubber (EPDM), or another material. The cross-sectional shape has in FIG. 2(a) a Y shape, in FIG. 2(b) a substantial Y shape in which a substantially trapezoidal protuberance 9 having flat vertex is provided in the center of the back portion 4 of the Y shape, and in FIG. 2(c) a substantial Y shape in which a substantially triangular protuberance 9' having a rounded vertex is provided in the center of the back portion 4 of the Y shape. In FIGS. (a), (b), and (c), the distal ends of the three outer points 3-1, 3-2, and 3-3 of the substantial Y shape all have rounded shapes, but the distal ends may also be linear, being held firmly against the members 1 and 2 at the corners of both ends as in FIG. 2(d).
A line connecting the three outer points 3-1, 3-2, and 3-3 of the substantial Y shape is a smoothly curved line recessed inward as shown in the drawings. In FIG. 1, the line joining the two outer points 3-2 and 3-3 is a straight line, which is different from FIG. 2(a).

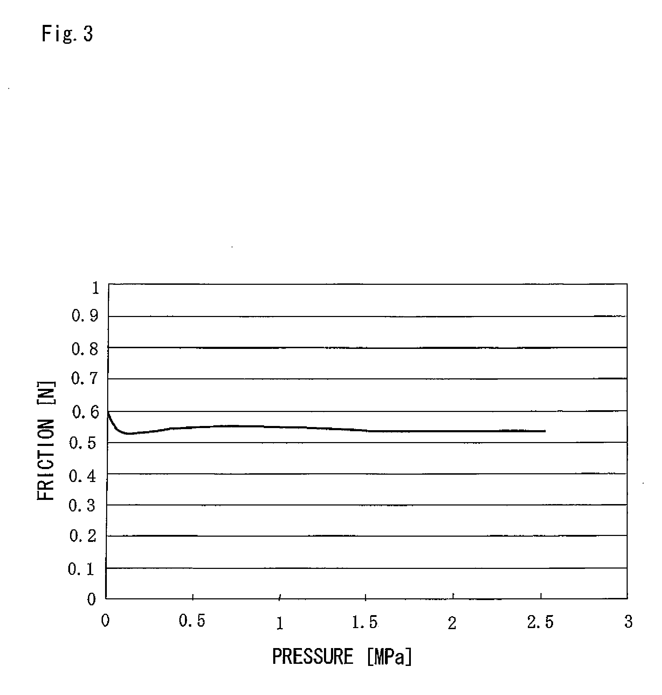

FIG. 3 shows the results of a friction test with the annular packing 3 having the substantially Y-shaped cross section of the present invention. The test conditions were the same as those used with the X ring of Prior Art 1, the seal diameter 0 being 4.8 mm and the interference being 0.1 mm.
This graph shows that when the annular packing 3 having the substantially Y-shaped cross section of the present invention is used, the friction is reduced to 1/2 to 1/3 in comparison with using a conventional X ring. It is clear that even if the pressure of the sealed fluid increases, the friction remains substantially constant.
The reason the friction is reduced is because in the annular packing 3 having the substantially Y-shaped cross section of the present invention, the high-pressure-side sliding part of the conventional X ring has been omitted.
The reason the friction remains substantially constant even when the pressure increases is believed to be because when the elastic annular packing 3 is appropriately fastened, a reacting expansion force occurs and has the effect of increasing friction, but a balance is achieved between this expansion force and the force acting to compress the sliding part 3-3 of the annular packing 3 caused by the pressure of the sealed fluid acting on the back portion 4 of the substantially Y-shaped annular packing 3 (the force acting in a direction away from the sliding member on the opposite side), whereby the friction remains substantially constant.

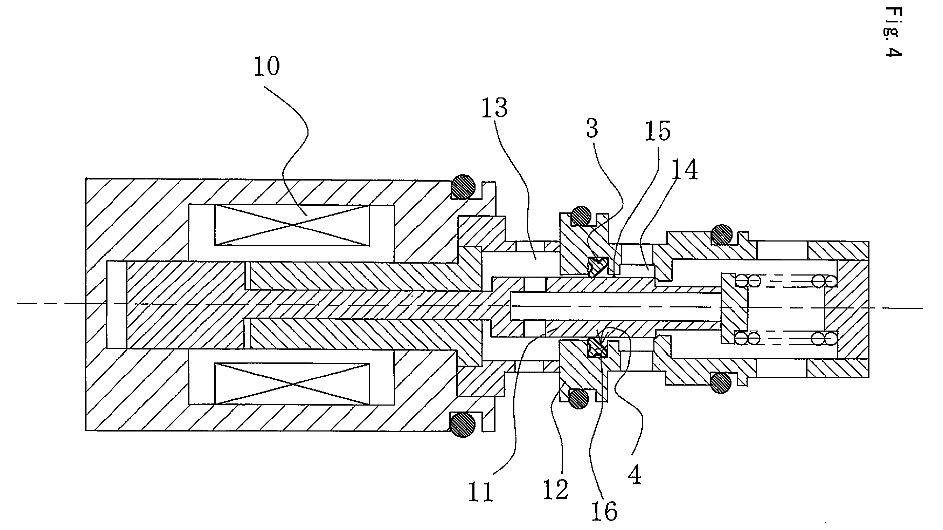

FIG. 4 is a front cross-sectional view showing a case in which the annular packing 3 having the substantially Y-shaped cross section of the present invention has been applied to a capacity control solenoid valve.
In this example, between a valve housing 12 and a valve body 11 driven back and forth in a left-right direction by a solenoid 10, the annular packing 3 is mounted in a narrow area 15 between a low-pressure side 13 and a high-pressure side 14, preventing contaminants from entering into the low-pressure side 13.
The annular packing 3 is mounted in an annular groove 16 provided to the valve housing 12, the lower side of the substantial Y shape slides along the valve body 11, the upper side is held firmly against the annular groove 16, and the back portion 4 of the substantial Y shape is disposed so as to face the high-pressure side 14.
Thus, by incorporating the annular packing 3 having the substantially Y-shaped cross section of the present invention into a capacity control solenoid valve, impurities can be prevented from entering into the minuscule gap between the valve body and the valve housing without enlarging the capacity control solenoid valve, and as a result, there is no need to increase the thrust of the solenoid.

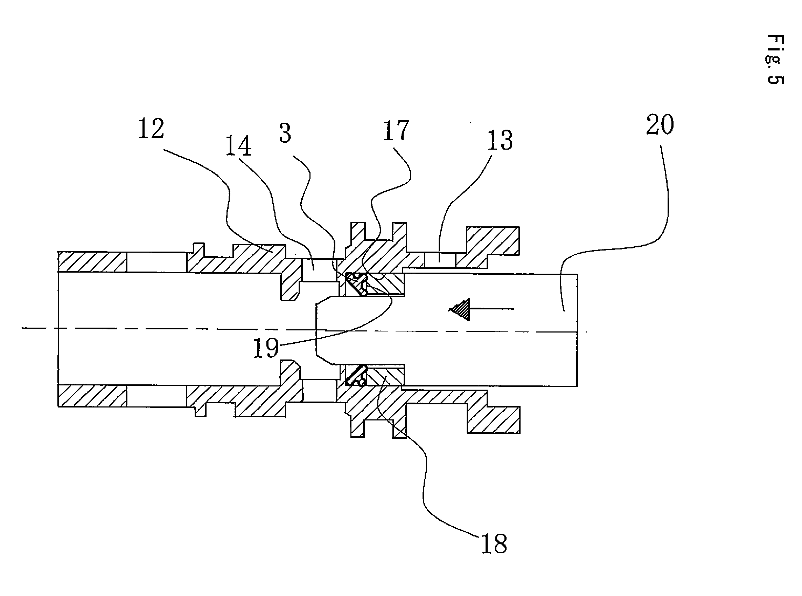

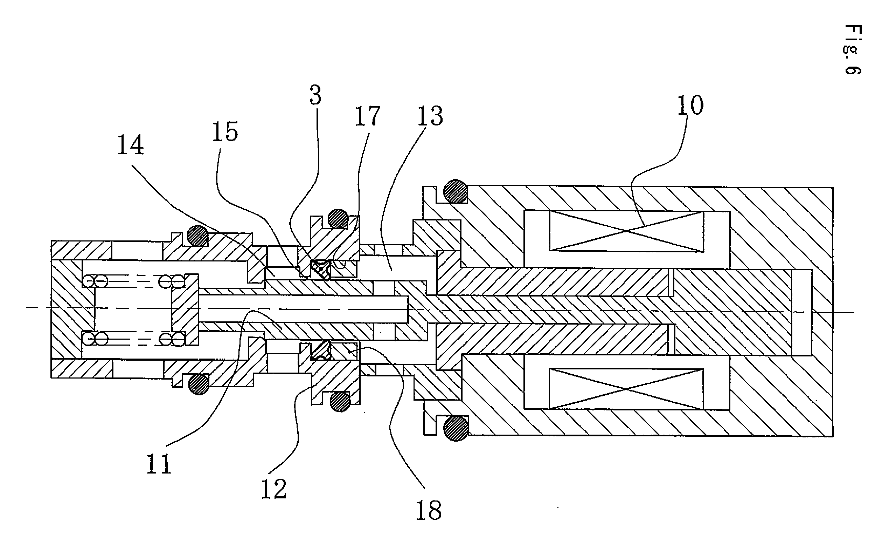

FIGS. 5 and 6 are front cross-sectional views for describing a case in which the annular packing 3 having the substantially Y-shaped cross section of the present invention is mounted in a capacity control solenoid valve, for example, wherein the same symbols shown in FIG. 4 indicate the same components.
In this example, between the valve body 11 and the valve housing 12, a diameter-enlarging part 17 for mounting the annular packing 3 is provided to the inside surface of the valve housing 12 in the narrow area 15 between the low-pressure side 13 and the high-pressure side 14. This diameter-enlarging part 17 is shaped such that its left side is connected to the narrow area 15, while is right side is open, as shown in FIG. 6.

To mount the annular packing 3, as shown in FIG.5,the annular packing 3 is disposed so that the back portion of the substantial Y shape faces the high-pressure side 14 (the left side of the drawing) and the upper side faces the diameter-enlarging part 17 of the inside surface of the valve housing 12, and with an annular spacer 18 having been placed on the front side 19 of the cross-sectional substantial Y shape of the annular packing 3, the annular packing 3 is pressed from the right (the open side) by a pressing jig 20. After this pressing, the annular spacer 18 is left in and the pressing jig 20 is pulled out. The annular spacer 18 formed with dimensions so as to fit with the inside surface of the diameter-enlarging part 17 as an interference fit, because an appropriate interference must continue to be applied to the annular packing 3 after mounting.
In FIG. 5 a case in which the annular packing 3 is pressed from the low-pressure side 13 is described, but when the annular packing 3 is pressed from the high-pressure side 14, the annular spacer 18 is disposed on the side of the annular packing 3 opposite the front side 19.

To ensure low friction in the annular packing 3, the interference of the annular packing 3 must be controlled, and the interference can be controlled by the position where the annular spacer 18 is incorporated. Therefore, although not shown in the drawings, a device is provided for controlling the pressing amount of the pressing jig 20 or the incorporated position of the annular spacer 18 to a target value.

Controlling the interference makes it possible to delicately manage the amount by which the annular packing 3 having the substantially Y-shaped cross section protrudes inward.
To determine the proper amount of inward protrusion of the annular packing 3 having the substantially Y-shaped cross section, a test for measuring the amount of seal leakage in advance is performed while pressure is being applied, and the protrusion amount can be determined from the amount of seal leakage.

### Reference Signs List

- 1: Outer member
- 2: Inner member
- 3: Annular packing
- 4: Back portion having substantial Y shape
- 5: Annular groove
- 6: Upper portion having substantially Y-shaped cross- section
- 7: Lower portion having substantially Y-shaped cross- section
- 8: Space on which high-pressure fluid acts
- 9: Protuberance
- 10: Solenoid
- 11: Valve body
- 12: Valve housing
- 13: Low-pressure side
- 14: High-pressure side
- 15: Narrow area
- 16: Annular groove
- 17: Diameter-enlarging part of inside surface of valve housing
- 18: Annular spacer
- 19: Front side of cross-sectional substantial Y shape
- 20: Pressing jig

## Claims

1. A contaminant sealing device comprising an annular packing for reciprocating movement or rotation, the packing being mounted to one of two members that face each other and being disposed in slidably intimate contact against another of the two members; the sealing device **characterized in that** the cross-sectional shape of the annular packing is a substantial Y shape, the back portion of the substantial Y shape is disposed so as to face a high pressure side, and a high-pressure fluid acts on a space formed by the back portion of the substantial Y shape and the two members that face each other.

2. The contaminant sealing device according to claim 1, **characterized in that** the annular packing is mounted in an annular groove of the outer member and is disposed so that an upper portion of the cross-sectional substantial Y shape makes intimate contact with the outer member, and a lower portion slides along the inner member.

3. The contaminant sealing device according to claim 1 or 2, **characterized in that** an annular spacer is arranged on one side surface of the cross-sectional substantial Y shape of the annular packing, the annular packing is configured to be capable of being mounted using a pressing jig with the annular spacer interposed therebetween, and interference of the annular packing can be managed by adjusting the position in which the annular spacer is incorporated.

4. A contaminant sealing device **characterized in that** the contaminant sealing device according to any of claims 1 through 3 is incorporated into a capacity control solenoid valve.
